# EUROPÄISCHE PATENTANMELDUNG

(11) **EP 4 783 014 A1**
(43) Veröffentlichungstag der Anmeldung: **29.07.2026**
(21) Anmeldenummer: 25153997.9
(22) Anmeldetag: 27.01.2025
(51) Int. Cl.: G06F 11/3604, G06F 21/60, G06F 11/362, G06F 11/07

(54) **VERFAHREN ZUM GENERIEREN WENIGSTENS EINER FEHLERAUSLÖSENDEN EINGABE ZUR FEHLERSUCHE IN EINEM SOFTWARE-PROGRAMM**

(71) Anmelder: Robert Bosch GmbH, 70442 Stuttgart (DE)
(72) Erfinder: Trieflinger, Sven, 71272 Renningen (DE); Eisele, Max Camillo, 71640 Ludwigsburg (DE)

(57) **Zusammenfassung**

Die Erfindung betrifft ein Verfahren (100) zum Generieren wenigstens einer fehlerauslösenden Eingabe zur Fehlersuche in einem Software-Programm (1), umfassend:
- Bereitstellen (101) einer Eingabe, die zu einem Fehler während einer Ausführung des Software-Programms (1) führt,
- Ermitteln (102) von einzelnen logischen Bedingungen innerhalb des Software-Programms (1), die erfüllt sind, wenn es zu dem Fehler während der Ausführung des Software-Programms (1) kommt,
- Bereitstellen (103) einer weiteren logischen Bedingung, gemäß welcher eine Ungleichheit einer generierten Eingabe mit der bereitgestellten Eingabe erforderlich ist,
- Generieren (104) wenigstens einer Eingabe, die die ermittelten einzelnen logischen Bedingungen sowie die bereitgestellte weitere logische Bedingung erfüllt,
- Überprüfen (105), ob die wenigstens eine generierte Eingabe zu dem Fehler während der Ausführung des Software-Programms (1) führt,
- Bereitstellen (106) der wenigstens einen überprüften Eingabe als die wenigstens eine fehlerauslösende Eingabe zur Fehlersuche in dem Software-Programm (1), wenn diese zu dem Fehler während der Ausführung des Software-Programms (1) führt.

Ferner betrifft die Erfindung ein Computerprogramm, eine Vorrichtung sowie ein Speichermedium zu diesem Zweck.

## Beschreibung

Die Erfindung betrifft ein Verfahren zum Generieren wenigstens einer fehlerauslösenden Eingabe zur Fehlersuche in einem Software-Programm. Ferner betrifft die Erfindung ein Computerprogramm, eine Vorrichtung sowie ein Speichermedium zu diesem Zweck.

### Stand der Technik

Trusted Execution Environments (TEE) sind Umgebungen, die durch Confidential-Computing-Techniken gesichert sind, z. B. Intel SGX Enclaves oder Intel TDX Trust Domains. Software-Programme, die sensible oder private Daten verarbeiten, können in TEEs im Produktionsmodus ausgeführt werden, um den Datenschutz zu gewährleisten und die Privatsphäre zu wahren. Software-Programme werden von Menschen oder heutzutage von generativer KI entwickelt, die beide Fehler machen und daher Bugs einführen. Alle Bugs eines Software-Programms zu finden, ist jedoch immer noch ein offenes Forschungsproblem. Folglich landen fehlerhafte Software-Programme in Produktionsumgebungen. In der Produktion kann sich ein Fehler offenbaren - das Software-Programm stürzt ab oder erzeugt eine falsche Ausgabe. Die Eingabe, die den Fehler verursacht hat, ist für das anschließende Debugging von großer Bedeutung, könnte jedoch sensible oder private Daten aus der vertrauenswürdigen Ausführungsumgebung nach außen dringen lassen. Für das ordnungsgemäße Debugging eines Software-Programms mit einer fehlerverursachenden Eingabe benötigt ein Ingenieur die potenziell sensible Eingabe, auf die der Ingenieur in den meisten Fällen keinen direkten Zugriff haben sollte. Beispielsweise fordert die DSGVO in Art. 5 §1 c), dass sensitive Daten "dem Zweck angemessen und erheblich sowie auf das für die Zwecke der Verarbeitung notwendige Maß beschränkt sein" sollen.

Concolic execution (vgl. "Patrice Godefroid, Nils Klarlund und Koushik Sen. 2005. DART: directed automated random testing. In Proceedings of the 2005 ACM SIGPLAN conference on Software-Programming language design and implementation (PLDI '05). Association for Computing Machinery, New York, NY, USA, 213-223. https://doi.org/10.1145/1065010.1065036"), kurz für "concrete symbolic execution", ist eine Software-Analysetechnik, die die konkrete Ausführung (Ausführung des Software-Programms mit spezifischen Eingaben) mit der symbolischen Ausführung (Analyse der Software-Programmpfade durch Behandlung der Eingaben als symbolische Variablen) kombiniert. Diese Methode ermöglicht die automatische Generierung von Testeingaben, mit denen verschiedene Ausführungspfade innerhalb eines Software-Programms untersucht werden können, um Fehler oder Schwachstellen aufzudecken.

Die Ausführung des Software-Programms mit symbolischen Eingaben kann als Baum dargestellt werden, wobei jeder Zweig einen möglichen Ausführungspfad darstellt, der durch die Pfadbeschränkungen bestimmt wird. Die symbolische Ausführungsmaschine untersucht diese Pfade, indem sie die Pfadbedingungen löst, in der Regel mithilfe eines Bedingungslösers (englisch: "Constraint solver") oder eines SMT ("Satisfiability Modulo Theories")-Lösers. Diese Löser (englisch: "Solver") sind leistungsstarke Tools, die bestimmen können, ob eine Reihe logischer Einschränkungen erfüllt werden kann, und wenn ja, ein Modell (eine Reihe konkreter Werte für die symbolischen Variablen) bereitstellen, das die Bedingungen erfüllt.

### Offenbarung der Erfindung

Gegenstand der Erfindung ist ein Verfahren mit den Merkmalen des Anspruchs 1, ein Computerprogramm mit den Merkmalen des Anspruchs 9, eine Vorrichtung mit den Merkmalen des Anspruchs 10 sowie ein
computerlesbares Speichermedium mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Generieren wenigstens einer fehlerauslösenden Eingabe zur Fehlersuche (englisch: "Debugging") in einem Software-Programm, umfassend:
- Bereitstellen einer Eingabe, die zu einem Fehler während einer Ausführung des Software-Programms führt, bzw. geführt hat, wobei die Eingabe beispielsweise durch einen Benutzer des Software-Programms im Rahmen der Ausführung des Software-Programms in eine Eingabemaske oder dergleichen eingegeben wird, wobei es sich bei der Eingabe beispielsweise um eine textuelle, visuelle und/oder akustische Eingabe handeln kann, die über entsprechende Sensoren und/oder Benutzerschnittstellen im Rahmen der Ausführung des Software-Programms erfasst werden kann,
- Ermitteln von einzelnen logischen Bedingungen innerhalb des Software-Programms, die erfüllt sind, wenn es zu dem Fehler während der Ausführung des Software-Programms kommt, wobei dieser Schritt im Rahmen einer symbolischen Ausführung (englisch: "Symbolic execution") und vorzugsweise automatisiert ausgeführt werden kann, wobei eine jeweilige logische Bedingung beispielsweise einer informationstechnischen "If"-Bedingung oder dergleichen entspricht,
- Bereitstellen, bzw. Definieren oder Formulieren, einer weiteren logischen Bedingung, gemäß welcher eine Ungleichheit einer generierten, bzw. symbolischen, Eingabe mit der bereitgestellten Eingabe erforderlich ist, wobei die weitere logische Bedingung beispielsweise ebenfalls als eine "If"-Bedingung oder dergleichen bereitgestellt werden kann und insbesondere einen Vergleich der generierten Eingabe mit der bereitgestellten Eingabe umfasst, wobei es sich bei der generierten Eingabe insbesondere um die im nächsten Schritt des Verfahrens generierte wenigstens eine Eingabe handelt,
- Generieren wenigstens einer Eingabe, die die ermittelten einzelnen logischen Bedingungen sowie die bereitgestellte weitere logische Bedingung erfüllt, wobei denkbar ist, dass eine Vielzahl an Eingaben generiert werden und anschließend, vorzugsweise automatisiert, ermittelt wird, welche dieser generierten Eingaben die die ermittelten einzelnen logischen Bedingungen sowie die bereitgestellte weitere logische Bedingung erfüllen,
- Überprüfen, ob die wenigstens eine generierte Eingabe zu dem Fehler während der Ausführung des Software-Programms führt, wofür das Software-Programm beispielsweise unter Verwendung der wenigstens einen generierten Eingabe jeweils ausgeführt werden kann,
- Bereitstellen der wenigstens einen überprüften Eingabe als die wenigstens eine fehlerauslösende Eingabe zur Fehlersuche in dem Software-Programm, wenn diese zu dem Fehler während der Ausführung des Software-Programms führt.

In anderen Worten wird die wenigstens eine überprüfte Eingabe als die wenigstens eine fehlerauslösende Eingabe bereitgestellt, um diese im Anschluss im Rahmen der Fehlersuche (englisch: "Debugging"), beispielsweise durch einen Entwickler oder auch automatisiert, verwendet werden zu können. Das Software-Programm wird insbesondere in einer vertrauenswürdigen Ausführungsumgebung (englisch: "Trusted Execution Environment", TEE) ausgeführt, wenn die bereitgestellte Eingabe zu dem Fehler während einer Ausführung des Software-Programms führt. Durch das Verfahren gemäß der Erfindung kann somit erreicht werden, dass fehlerverursachende Eingaben generiert werden können, die von der ursprünglichen bereitgestellten Eingabe abweichen, wodurch beispielsweise sensible Daten geschützt werden können. Das Verfahren gemäß der Erfindung ermöglicht beispielsweise ein effizientes Debugging in vertrauenswürdigen Ausführungsumgebungen (TEE).

In einer weiteren Möglichkeit kann vorgesehen sein, dass das Verfahren ferner umfasst:
- Negieren der ermittelten einzelnen logischen Bedingungen, wobei das Negieren jeweils einzeln für jede der ermittelten einzelnen logischen Bedingungen durchgeführt wird, wobei im Rahmen des Negierens insbesondere ein Wahrheitswert der jeweiligen logischen Bedingung umgekehrt wird, d.h. vereinfacht ausgedrückt "wahr" wird zu "falsch" und umgekehrt, wobei das Negieren beispielsweise durch Hinzufügen eines Negationsoperators wie "!" durchgeführt werden kann,
- Prüfen, ob ein Pfad des Fehlers in dem Software-Programm nach dem Negieren noch erreichbar ist, wobei das Prüfen jeweils einzeln für jede der ermittelten einzelnen logischen Bedingungen nach dem Negieren durchgeführt wird, wobei das Prüfen beispielsweise auf Basis einer symbolischen Ausführung oder auch auf Basis einer konkreten Ausführung des Software-Programms geprüft werden kann,
- Filtern der ermittelten einzelnen logischen Bedingungen in Abhängigkeit von einem jeweiligen Ergebnis des Prüfens, wobei insbesondere logische Bedingungen herausgefiltert und im weiteren Verlauf des Verfahrens nicht mehr berücksichtigt werden, bei denen der Pfad des Fehlers in dem Software-Programm nach dem Negieren nicht mehr erreichbar ist, d.h. diese logischen Bedingungen bleiben insbesondere negiert.

Durch das Negieren der einzelnen logischen Bedingungen kann ermittelt werden, welche Bedingungen für den Fehler wesentlich sind. Das Filtern der logischen Bedingungen kann eine effizientere Analyse und eine Fokussierung auf die relevantesten logischen Bedingungen ermöglichen.

Gemäß einem weiteren Vorteil kann vorgesehen sein, dass das Generieren der wenigstens einen Eingabe unter Verwendung eines Lösers für kombinierte Logikprobleme, insbesondere eines Constraint-Solvers, bzw. eines Lösers für erfüllbarkeitsmodulierte Theorien (englisch: SMT-Solver ("Satisfiability Modulo Theories Solver")) durchgeführt wird. SMT-Solver bauen insbesondere auf SAT-Solvern (Boolean Satisfiability) auf, die prüfen, ob eine boolesche Formel erfüllbar ist, d.h., ob es eine Belegung von Variablen gibt, die die Formel wahr macht. Ein SMT-Solver ist insbesondere ein spezialisiertes Software-Tool, das logische Probleme löst, die in der SMT-Formulierung beschrieben werden. Diese Probleme umfassen beispielsweise boolesche Ausdrücke (wie in der SAT-Logik) und zusätzliche theoriespezifische Bedingungen (wie Arithmetik, Gleichungen oder Arrays). Ein SMT-Solver nimmt als Eingabe beispielsweise eine Menge von logischen Formeln in einer standardisierten Sprache (z. B. SMT-LIB-Format) und prüft, ob diese Formeln erfüllbar (englisch: "satisfiable") sind. Der Solver gibt beispielsweise eines der folgenden Ergebnisse zurück: "Satisfiable", wenn es eine Lösung gibt, die alle Bedingungen erfüllt. Wenn es "Satisfiable" ist, kann der Solver auch eine Belegung zurückgeben, um zu beweisen, dass die Formel erfüllbar ist. "Unsatisfiable", wenn es keine Lösung gibt, die alle Bedingungen erfüllt. "Unknown", wenn der Solver keine Antwort finden konnte, z. B. aufgrund von Begrenzungen in der Theorie oder Laufzeit. Beispiele für SMT-Solver sind Z3 (von Microsoft Research), CVC4/CVC5, Yices oder MathSAT.

Es ist somit möglich, dass ein spezialisierter Algorithmus eingesetzt wird, um die generierten Eingaben zu optimieren. Dieser Lösungsalgorithmus kann die Generierung effizienter und zielgerichteter gestalten. Die Verwendung eines solchen Lösungsalgorithmus ermöglicht es außerdem, auch für komplexere Fehler Szenarien geeignete Eingabedaten zu finden.

Zudem ist im Rahmen der Erfindung denkbar, dass die bereitgestellte Eingabe sensible Daten umfasst und das Verfahren ferner umfasst:
- Überprüfen der wenigstens einen generierten Eingabe auf Basis wenigstens eines Kriteriums, um festzustellen, ob die wenigstens eine generierte Eingabe die sensiblen Daten offenlegt,
wobei das Bereitstellen nur durchgeführt wird, wenn ein Ergebnis des Überprüfens indiziert, dass die wenigstens eine generierte Eingabe die sensiblen Daten nicht offenlegt. Dies hat insbesondere den Vorteil, dass sensible Daten während der Fehlersuche geschützt werden können, d.h. nicht offengelegt werden, wodurch beispielsweise der Datenschutz gewährleistet werden kann.

Gemäß einer vorteilhaften Weiterbildung der Erfindung kann vorgesehen sein, dass das wenigstens eine Kriterium eine Kardinalität der wenigstens einen generierten Eingabe und/oder eine Abstandsmetrik, beispielsweise Levenshtein-Distanz, zur Bewertung eines Abstands zu der bereitgestellten Eingabe ist. Dadurch kann die generierte Eingabe hinsichtlich Ähnlichkeit zur ursprünglichen Eingabe überprüft werden. Dies ermöglicht eine feinere Steuerung des Fehlersuchprozesses und kann dazu beitragen, weniger relevante Eingaben zu filtern. Die Verwendung von Kardinalität oder Abstandsmetriken erlaubt eine quantitative Bewertung. Die Kardinalität beschreibt insbesondere eine Anzahl an möglichen Werten, bei denen die Eingabe zu dem Fehler während der Ausführung des Software-Programms führt. Abstandsmetriken wie die Levenshtein-Distanz messen insbesondere eine minimale Anzahl von Operationen, die erforderlich sind, um eine Zeichenkette in eine andere zu transformieren, d.h. die wenigstens eine generierte Eingabe in die bereitgestellte Eingabe. Die Levenshtein-Distanz berücksichtigt beispielsweise drei grundlegende Operationen: ein Einfügen eines Zeichens, ein Löschen eines Zeichens und ein Ersetzen eines Zeichens. Die Levenshtein-Distanz ist insbesondere definiert als die minimale Anzahl dieser Operationen, um die Transformation durchzuführen.

Vorteilhaft ist es darüber hinaus, wenn im Rahmen der Erfindung das wenigstens eine Kriterium eine Freigabe eines Benutzers, insbesondere eines Besitzers von Daten in der bereitgestellten Eingabe (englisch: "Data owner"), d.h. eines Benutzers, den die sensiblen Daten betreffen, oder von welchem die sensiblen Daten in der bereitgestellten Eingabe stammen, ist, wobei das Überprüfen der wenigstens einen generierten Eingabe umfasst:
- Initiieren einer Ausgabe an den Benutzer, wobei mittels der Ausgabe die Freigabe des Benutzers angefragt wird, wobei die Ausgabe beispielsweise visuell über ein Display ein Textfenster und/oder eine Eingabemaske und/oder über einen Lautsprecher eine akustische Ausgabe umfassen kann,
- Empfangen der Freigabe des Benutzers oder einer Ablehnung des Benutzers, wobei im Falle der Ablehnung das Bereitstellen nicht durchgeführt und/oder das Generieren erneut durchgeführt wird.

Die Freigabe oder die Ablehnung kann beispielsweise mittels eines Mausklicks oder Textbefehls oder auch eines akustischen Befehls durch den Benutzer bereitgestellt werden. Somit kann der Benutzer zur Kontrolle über die generierten Eingaben entscheiden. Durch die Benutzerfreigabe kann sichergestellt werden, dass nur solche Eingabedaten für die Fehlersuche verwendet werden, beispielsweise durch eine dritte Partei wie einem Entwickler, deren Offenlegung dem Benutzer als akzeptabel erscheint. Dies kann eine Sicherheit erhöhen und ein Risiko minimieren, dass potenziell sensible Daten ausgeführt werden.

In einer weiteren Möglichkeit kann vorgesehen sein, dass im Rahmen des Ermittelns eine symbolische und/oder eine konkolische Ausführung durch einen Pfad einer konkreten Ausführung des Software-Programms mit der bereitgestellten Eingabe geleitet wird. Beispielsweise kann zunächst die konkrete Ausführung des Software-Programms mit der bereitgestellten Eingabe durchgeführt und anschließend die symbolische Ausführung entlang des Pfads der konkreten Ausführung geleitet werden. Dadurch kann ein Rechenaufwand im Rahmen des Ermittelns reduziert werden, der mit einer rein symbolischen Ausführung entstehen würde.

Die symbolische Ausführung (englisch: "symbolic execution") ist insbesondere eine Technik zur Analyse von Software-Programmen, bei der diese mit symbolischen Eingabewerten anstelle konkreter Werte ausgeführt werden. Diese symbolischen Werte repräsentieren beispielsweise allgemeine Eingaben und ermöglichen es, den Kontrollfluss und die Bedingungen des Software-Programms zu analysieren. Das Ziel ist es insbesondere, alle möglichen Ausführungspfade durch das Software-Programm zu untersuchen. Die Technik erzeugt Bedingungen (englisch: "Constraints"), die die Beziehungen zwischen den symbolischen Eingaben und Programmausgaben beschreiben. Diese Bedingungen können beispielsweise in einer Constraint-Solver-Engine überprüft werden, um zu bestimmen, ob diese erfüllbar sind.

Die konkolische Ausführung (englisch: "concolic execution") kombiniert insbesondere die symbolische und eine konkrete Ausführung, um eine Analyse von Software-Programmen effizienter zu gestalten. Dabei wird gemäß der Erfindung das Software-Programm insbesondere nacheinander mit realen Eingabewerten (konkret), d.h. mit der bereitgestellten Eingabe, und anschließend mit symbolischen Werten ausgeführt. Die konkrete Ausführung kann eine spezifische Ausführung des Programms bereitstellen, wodurch die symbolische Ausführung Bedingungen für diese konkrete Ausführung ermitteln kann.

Es ist denkbar, dass das Verfahren ferner umfasst:
- Übertragen der wenigstens einen fehlerauslösenden Eingabe an eine externe Datenverarbeitungsvorrichtung, um eine Verwendung der wenigstens einen fehlerauslösenden Eingabe auf der externen Datenverarbeitungsvorrichtung zur Fehlersuche in dem Software-Programm bereitzustellen.

Die externe Datenverarbeitungsvorrichtung kann beispielsweise von einem Entwickler bedient werden und kann insbesondere für die Fehlersuche (englisch: "Debugging") des Software-Programms verwendet werden. Das Debugging kann manuell durch den Entwickler koordiniert und/oder automatisiert durchgeführt werden. Mit dem Verfahren gemäß der Erfindung kann somit vorteilhaft ein unabhängiger Dritter die Fehlersuche für das Software-Programm durchführen, auch wenn in der fehlerauslösenden Eingabe sensible Daten vorliegen.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. wenigstens ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch wenigstens einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Speichermediums sowie eines Computerprogramms gemäß Ausführungsbeispielen der Erfindung,
- Fig. 2: eine schematische Darstellung einer Vorrichtung, eines Software-Programms und einer externen Datenverarbeitungsvorrichtung gemäß Ausführungsbeispielen der Erfindung.

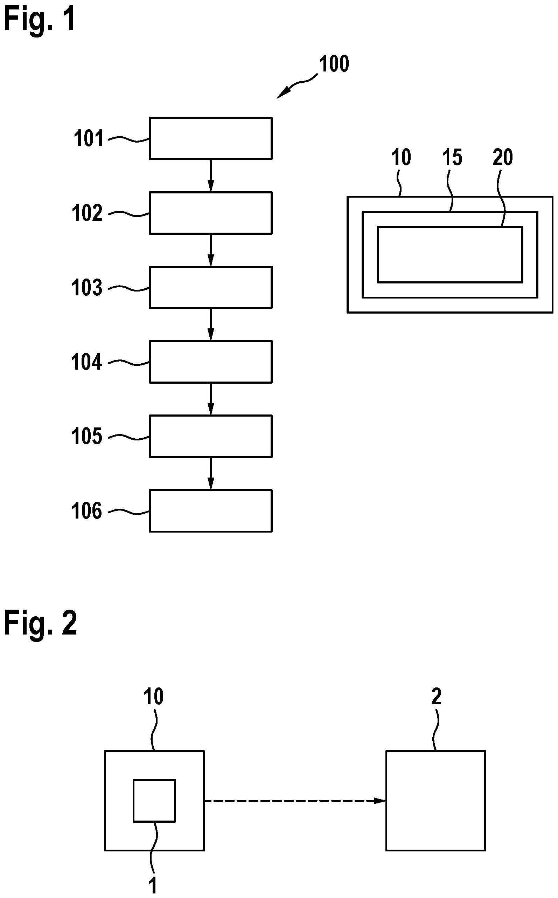

In Fig. 1 sind ein Verfahren 100, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Generieren wenigstens einer fehlerauslösenden Eingabe zur Fehlersuche in einem Software-Programm 1. In einem ersten Schritt 101 wird eine Eingabe bereitgestellt, die zu einem Fehler während einer Ausführung des Software-Programms 1 führt. In einem zweiten Schritt 102 werden einzelne logische Bedingungen innerhalb des Software-Programms 1 ermittelt, die erfüllt sind, wenn es zu dem Fehler während der Ausführung des Software-Programms 1 kommt. In einem dritten Schritt 103 wird eine weitere logische Bedingung bereitgestellt, gemäß welcher eine Ungleichheit einer generierten Eingabe mit der bereitgestellten Eingabe erforderlich ist. In einem vierten Schritt 104 wird wenigstens eine Eingabe generiert, die die ermittelten einzelnen logischen Bedingungen sowie die bereitgestellte weitere logische Bedingung erfüllt. In einem fünften Schritt 105 wird überprüft, ob die wenigstens eine generierte Eingabe zu dem Fehler während der Ausführung des Software-Programms 1 führt. In einem sechsten Schritt 106 wird die wenigstens eine überprüfte Eingabe als die wenigstens eine fehlerauslösende Eingabe zur Fehlersuche in dem Software-Programm 1 bereitgestellt, wenn diese zu dem Fehler während der Ausführung des Software-Programms 1 führt.

Fig. 2 zeigt eine schematische Darstellung einer Vorrichtung 10, auf welcher ein Software-Programm 1 implementiert ist, und eine externe Datenverarbeitungsvorrichtung 2 gemäß Ausführungsbeispielen der Erfindung. Die Vorrichtung 10 kann eine vertrauenswürdige Ausführungsumgebung (englisch: "Trusted Execution Environment", TEE) bereitstellen, innerhalb welcher das Software-Programm 1 ausgeführt wird. Die Vorrichtung 10 kann die wenigstens eine fehlerauslösende Eingabe an die externe Datenverarbeitungsvorrichtung 2 übertragen, um eine Verwendung der wenigstens einen fehlerauslösenden Eingabe auf der externen Datenverarbeitungsvorrichtung 2 zur Fehlersuche in dem Software-Programm 1 bereitzustellen.

Jede Eingabe, die denselben Fehler wie die bereitgestellte Eingabe (mit sensiblen Daten) verursacht, kann für die Fehlerbehebung ausreichen. Gemäß der Erfindung kann daher eine äquivalente fehlerauslösende Eingabe abgeleitet werden, die keine oder weniger sensible oder private Daten umfasst, welcher dann einem Entwickler zur Fehlerbehebung übergeben werden können.

Gemäß Ausführungsbeispielen der Erfindung werden Teile der konkolischen Ausführung verwendet, um logische Eingabe-Bedingungen (englisch: "input constraints") zu sammeln, die zum Fehler des Software-Programms 1 führen. Zunächst führen diese logischen Bedingungen insbesondere zur ursprünglichen Eingabe. Daher können in einem nächsten Schritt nicht wesentliche logische Bedingungen identifiziert und entfernt werden. Wenn nur noch die wesentlichen logischen Bedingungen übrig sind, kann ein Constraint-Solver verschiedene Eingaben generieren, die denselben Fehler bei der Ausführung des Software-Programms 1 verursachen. Ferner kann entschieden werden, ob die generierten Eingaben, die möglicherweise immer noch sensible oder private Daten preisgeben, zur Fehlerbehebung offengelegt werden können.

Mit dem Verfahren gemäß Ausführungsbeispielen der Erfindung, welches nachstehend beschrieben wird, können Änderungen in der Eingabe maximiert werden, während ein gleiches Verhalten beibehalten werden kann.

In einem ersten Schritt können logische Bedingungen für eine bereitgestellte Eingabe gesammelt werden, die zu einem Fehler in dem Software-Programm 1 führen. Hierfür kann die symbolische und/oder konkolische Ausführung verwendet werden. Die bereitgestellte Eingabe, bzw. ein entsprechender Eingabepuffer oder eine Eingabeschnittstelle, kann als symbolische Variable deklariert werden. In einer ersten Alternative kann die symbolische Ausführung verwendet werden, um den Fehler zu erreichen. In einer zweiten Alternative kann eine Ablaufverfolgung der konkreten Ausführung durchgeführt werden und im Rahmen der symbolischen Ausführung kann mit der Ablaufverfolgung zum Fehler geführt werden, indem abweichende Software-Programmzustände während der symbolischen Ausführung verworfen werden.

Gemäß einer möglichen Ergänzung des ersten Schritts können die logischen Bedingungen bewertet werden, um logische Bedingungen zu identifizieren, die für die Fehlerverursachung wesentlich sind. Jede logische Bedingung kann daher zuerst negiert werden. Anschließend kann getestet werden, ob der Fehler(-pfad) durch Verwendung der symbolischen Ausführung noch erreichbar ist. Wenn er noch erreichbar ist, ist die logische Bedingung insbesondere nicht wesentlich und kann ignoriert werden, d. h. sie kann negiert bleiben. Wenn der Fehler nicht mehr erreichbar ist, ist die logische Bedingung insbesondere wesentlich und kann wiederhergestellt werden, um nicht negiert zu werden.

In einem zweiten Schritt kann eine weitere logische Bedingung hinzugefügt, bzw. bereitgestellt, werden, gemäß welcher eine Ungleichheit einer generierten Eingabe mit der bereitgestellten Eingabe erforderlich ist, bzw. in anderen Worten gemäß welcher die generierte, bzw. die symbolische, Eingabe nicht gleich der bereitgestellten konkreten Eingabe sein darf.

In einem dritten Schritt kann ein Constraint Solver verwendet werden, um Eingaben zu generieren, die alle Bedingungen erfüllen.

In einem vierten Schritt kann überprüft werden, ob die generierten Eingaben denselben Fehler verursachen wie die ursprüngliche bereitgestellte Eingabe.

In einem fünften Schritt, der optional ist, kann überprüft werden, ob die generierten Eingaben keine sensiblen oder privaten Informationen preisgeben. Eine mögliche Lösung ist die Verwendung einer Disclosure Policy Engine, die einen anwendungsspezifischen Satz von Kriterien, bzw. Richtlinien, auswertet. Ein Kriterium kann anhand der generierten Eingaben bewertet werden, die die Offenlegung der generierten Eingaben entweder gewährt oder ablehnt. Kriterien können mit logischen Operatoren verknüpft werden, z. B. AND, OR, NOT. Kriterien können eine beliebige Logik implementieren. Beispiele für Kriterien sind die folgenden: Eine Kardinalität der Menge der generierten Eingaben kann ausgewertet werden und eine Offenlegung ist nur zulässig, wenn die Kardinalität über einem definierten Schwellenwert liegt. Zusätzlich oder alternativ kann eine Abstandsmetrik berechnet werden, z. B. die Levenshtein-Distanz, zur ursprünglichen Eingabe, und eine Offenlegung ist nur zulässig, wenn die berechnete Distanz über einem definierten Schwellenwert liegt. Zusätzlich oder alternativ kann ein Benutzer, insbesondere Dateneigentümer, oder eine andere Person, die ihre Zustimmung geben muss, gefragt werden, ob die generierten Eingaben offengelegt werden dürfen.

In einem sechsten Schritt können die generierten Eingaben, die den Fehler verursacht haben und vorzugsweise keine sensiblen Daten enthalten, d. h. die die oben genannte Überprüfung bestanden haben, zurückgegeben werden.

Eine vorteilhafte Implementierung der Erfindung kann eine symbolische/konkrete Ausführungsmaschine wie "Angr" für die symbolische und/oder konkolische Ausführung verwenden (vgl. "F. Gritti et al., "SYMBION: Interleaving Symbolic with Concrete Execution," 2020 IEEE Conference on Communications and Network Security (CNS), Avignon, France, 2020, pp. 1-10, doi: 10.1109/CNS48642.2020.9162164."). Die Eingabe in das Software-Programm kann zunächst als symbolisch deklariert werden. Da eine konkrete Eingabe vorhanden ist, ist die Variante, bei der ein Pfad der konkreten Ausführung erhalten wird und die symbolische Ausführung mit dem Pfad zum Fehler geführt wird, wie oben erwähnt, am vielversprechendsten, um Einschränkungen, die den Fehler verursachen, in angemessener Zeit zu finden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Generieren wenigstens einer fehlerauslösenden Eingabe zur Fehlersuche in einem Software-Programm (1), umfassend:
- Bereitstellen (101) einer Eingabe, die zu einem Fehler während einer Ausführung des Software-Programms (1) führt,
- Ermitteln (102) von einzelnen logischen Bedingungen innerhalb des Software-Programms (1), die erfüllt sind, wenn es zu dem Fehler während der Ausführung des Software-Programms (1) kommt,
- Bereitstellen (103) einer weiteren logischen Bedingung, gemäß welcher eine Ungleichheit einer generierten Eingabe mit der bereitgestellten Eingabe erforderlich ist,
- Generieren (104) wenigstens einer Eingabe, die die ermittelten einzelnen logischen Bedingungen sowie die bereitgestellte weitere logische Bedingung erfüllt,
- Überprüfen (105), ob die wenigstens eine generierte Eingabe zu dem Fehler während der Ausführung des Software-Programms (1) führt,
- Bereitstellen (106) der wenigstens einen überprüften Eingabe als die wenigstens eine fehlerauslösende Eingabe zur Fehlersuche in dem Software-Programm (1), wenn diese zu dem Fehler während der Ausführung des Software-Programms (1) führt.

2. Verfahren (100) nach Anspruch 1,
**dadurch gekennzeichnet,**
**dass** das Verfahren (100) ferner umfasst:
- Negieren der ermittelten einzelnen logischen Bedingungen, wobei das Negieren jeweils einzeln für jede der ermittelten einzelnen logischen Bedingungen durchgeführt wird,
- Prüfen, ob ein Pfad des Fehlers in dem Software-Programm (1) nach dem Negieren noch erreichbar ist, wobei das Prüfen jeweils einzeln für jede der ermittelten einzelnen logischen Bedingungen nach dem Negieren durchgeführt wird,
- Filtern der ermittelten einzelnen logischen Bedingungen in Abhängigkeit von einem jeweiligen Ergebnis des Prüfens.

3. Verfahren (100) nach einem der vorhergehenden Ansprüche, **dadurch gekennzeichnet,**
**dass** das Generieren (104) der wenigstens einen Eingabe unter Verwendung eines Lösers für kombinierte Logikprobleme durchgeführt wird.

4. Verfahren (100) nach einem der vorhergehenden Ansprüche, **dadurch gekennzeichnet,**
**dass** die bereitgestellte Eingabe sensible Daten umfasst und das Verfahren (100) ferner umfasst:
- Überprüfen der wenigstens einen generierten Eingabe auf Basis wenigstens eines Kriteriums, um festzustellen, ob die wenigstens eine generierte Eingabe die sensiblen Daten offenlegt,
wobei das Bereitstellen (106) nur durchgeführt wird, wenn ein Ergebnis des Überprüfens indiziert, dass die wenigstens eine generierte Eingabe die sensiblen Daten nicht offenlegt.

5. Verfahren (100) nach Anspruch 4,
**dadurch gekennzeichnet,**
**dass** das wenigstens eine Kriterium eine Kardinalität der wenigstens einen generierten Eingabe und/oder eine Abstandsmetrik zur Bewertung eines Abstands zu der bereitgestellten Eingabe ist.

6. Verfahren (100) nach Anspruch 4 oder 5,
**dadurch gekennzeichnet,**
**dass** das wenigstens eine Kriterium eine Freigabe eines Benutzers ist, wobei das Überprüfen der wenigstens einen generierten Eingabe umfasst:
- Initiieren einer Ausgabe an den Benutzer, wobei mittels der Ausgabe die Freigabe des Benutzers angefragt wird,
- Empfangen der Freigabe des Benutzers oder einer Ablehnung des Benutzers, wobei im Falle der Ablehnung das Bereitstellen (106) nicht durchgeführt und/oder das Generieren (104) erneut durchgeführt wird.

7. Verfahren (100) nach einem der vorhergehenden Ansprüche,
**dadurch gekennzeichnet,**
**dass** im Rahmen des Ermittelns (102) eine symbolische und/oder eine konkolische Ausführung durch einen Pfad einer konkreten Ausführung des Software-Programms (1) mit der bereitgestellten Eingabe geleitet wird.

8. Verfahren (100) nach einem der vorhergehenden Ansprüche,
**dadurch gekennzeichnet,**
**dass** das Verfahren (100) ferner umfasst:
- Übertragen der wenigstens einen fehlerauslösenden Eingabe an eine externe Datenverarbeitungsvorrichtung (2), um eine Verwendung der wenigstens einen fehlerauslösenden Eingabe auf der externen Datenverarbeitungsvorrichtung (2) zur Fehlersuche in dem Software-Programm (1) bereitzustellen.

9. Computerprogramm (20), umfassend Befehle, die bei der Ausführung des Computerprogramms (20) durch wenigstens einen Computer (10) diesen veranlassen, das Verfahren (100) nach einem der vorhergehenden Ansprüche auszuführen.

10. Vorrichtung (10) zur Datenverarbeitung, die eingerichtet ist, das Verfahren (100) nach einem der Ansprüche 1 bis 8 auszuführen.

11. Computerlesbares Speichermedium (15), umfassend Befehle, die bei der Ausführung durch wenigstens einen Computer (10) diesen veranlassen, die Schritte des Verfahrens (100) nach einem der Ansprüche 1 bis 8 auszuführen.
